# EUROPÄISCHE PATENTANMELDUNG

(11) **EP 2 169 268 A2**
(43) Veröffentlichungstag der Anmeldung: **31.03.2010**
(21) Anmeldenummer: 09164325.4
(22) Anmeldetag: 01.07.2009
(51) Int. Cl.: F16H 25/18, F02M 25/07

(54) **Stellvorrichtung zur Umwandlung einer rotatorischen Bewegung in eine lineare Bewegung**

(30) Priorität: 26.09.2008 DE 102008049251
(71) Anmelder: Pierburg GmbH, 41460 Neuss (DE)
(72) Erfinder: Nowak, Martin, 40476, Düsseldorf (DE); Brunetti, Costantino, 58730, Fröndenberg (DE); Burger, Andreas, 47803, Krefeld (DE); Rothgang, Stefan, 47495, Rheinberg (DE)
(74) Vertreter: Ter Smitten, Hans

(57) **Zusammenfassung**

Stellvorrichtungen zur Umwandlung einer rotatorischen Bewegung in eine lineare Bewegung sind prinzipiell bekannt. Häufig ergeben sich Probleme bei der Lagerung der rotierenden Teile. Hohe Stellkräfte auch durch auftretende Verschmutzung sind häufig die Folge.

Es wird daher eine Stellvorrichtung (2) mit einem Gehäuse (4), einer Antriebseinheit (6), die ein Drehmoment erzeugt, einem Rotationskörper (30), der drehbar gelagert ist, zumindest eine Kurvenbahn (58) aufweist und auf den das Drehmoment direkt oder indirekt übertragbar ist, einem Kopplungselement (60), welches in der Kurvenbahn (58) geführt ist und gegen ein Verdrehen um die Achse des Rotationskörpers (30) direkt oder indirekt gesichert ist und einem Verstellelement (8), welches fest mit dem Kopplungselement (60) verbunden ist, vorgeschlagen, bei dem der Rotationskörper (30) im Gehäuse (4) über eine Lagereinheit (32) gelagert sowie axial und radial gegen Verschieben gesichert ist.

Bei einer derartigen Ausführung sind nur geringe Stellkräfte notwendig. Die Stellvorrichtung weist eine hohe Lebensdauer auf.

## Beschreibung

Die Erfindung betrifft eine Stellvorrichtung zur Umwandlung einer rotatorischen Bewegung in eine lineare Bewegung mit einem Gehäuse, einer Antriebseinheit, die ein Drehmoment erzeugt, einem Rotationskörper, der drehbar gelagert ist, zumindest eine Kurvenbahn aufweist und auf den das Drehmoment direkt oder indirekt übertragbar ist, einem Kopplungselement, welches in der Kurvenbahn geführt ist und gegen ein Verdrehen um die Achse des Rotationskörpers direkt oder indirekt gesichert ist, und einem Verstellelement, welches fest mit dem Kopplungselement verbunden ist.

Derartige Stellvorrichtungen werden insbesondere zum Antrieb von Abgasrückführventilen verwendet, können aber beispielsweise auch für Waste-Gate-Ventile, Registerklappen oder als VTG-Steller verwendet werden.

Es sind verschiedene Abgasrückführventile mit derartigen oder ähnlichen Stellvorrichtungen bekannt, wobei ein Elektromotor als Antriebseinheit dient, dessen Ausgangswelle mit unterschiedlich gearteten Rotationskörpern gekoppelt ist, deren Bewegung über unterschiedliche Kopplungsmechanismen in eine lineare Bewegung einer als Verstellelement dienenden Ventilstange umgewandelt wird.

So wird in der DE 196 03 592 C1 ein Abgasrückführventil beschrieben, bei dem die Bewegung eines Drehmagneten auf ein topfförmiges Element übertragen wird, welches über ein Kugellager mit dem Element gekoppelt ist, an dessen Außenumfang eine Kulissenbahn ausgebildet ist, in der das Kugellager des topfförmigen Elementes läuft, so dass sich dieses Element bei Rotation des topfförmigen Elementes hebt und senkt. Mit diesem Element ist die Ventilstange gekoppelt, welche über ein zusätzliches Lager geführt wird. Der Aufbau einer derartigen Vorrichtung ist sehr aufwendig, da mehrere voneinander abhängige Lagereinheiten verwendet werden müssen. So bestehen Probleme bei der Kopplung zwischen dem Rotationselement und dem folgenden linear verschieblichen Element, da die Lagerung des Rotationselementes über die Lagerung der Ventilstange erfolgt.

Zusätzlich ist aus der GB 2 101 715 A ein Abgasrückführventil bekannt, dessen Elektromotor mit einer Spindel gekoppelt ist, die mit ihrem Außengewinde in ein Innengewinde einer Ventilstange greift. Die Ventilstange ist gegen Verdrehen gesichert, so dass die rotatorische Bewegung der Spindel in eine lineare Bewegung des Ventilelementes umgewandelt wird. Der Aufbau einer derartigen Ventilvorrichtung ist zwar sehr einfach und kostengünstig, jedoch bestehen Probleme bei der Verwendung, da sich die Gewindegänge beispielsweise durch Verschmutzung festsetzen können. Des Weiteren besteht eine hohe Reibung. Zusätzlich ist es erforderlich, die Achse der Spindel und der Ventilstange zur Vermeidung eines Verklemmens exakt zueinander auszurichten.

Des Weiteren ist aus der US 5,606,957 eine Abgasrückführeinrichtung bekannt, bei der ein Rotationskörper über einen Schrittmotor mittels eines Federgliedes gedreht werden kann. Der Rotationskörper weist ein Innengewinde auf, welches mit einem Außengewinde einer Ventilstange korrespondiert. Die Ventilstange ist über eine Madenschraube gegen Verdrehen gesichert. Der Rotationskörper ist über zwei Drucklager gelagert, welche sich an seinen axialen Enden befinden, so dass das untere Drucklager am Gehäuse anliegt, und das obere Drucklager am Antriebselement. Der Rotationskörper wird lediglich durch die beiden Gewinde in seiner Stellung festgelegt, so dass dessen Lagerung über die Lagerung der Ventilstange erfolgt. Dies bedeutet jedoch, dass auch hier mit einem Verklemmen des Gewindes im Betrieb, insbesondere bei zusätzlich auftretenden Verschmutzungen, gerechnet werden muss.

Entsprechend bestehen bei den bekannten Ausführungen die Nachteile, dass sie im Betrieb sehr empfindlich gegen Störungen sind und die Antriebseinheiten relativ groß ausgeführt werden müssen, um ausreichend hohe Stellkräfte auch bei einem Verklemmen bereitstellen zu können. Des Weiteren liegt eine hohe Empfindlichkeit gegen Verschmutzung vor.

Es stellt sich daher die Aufgabe, eine Stellvorrichtung zu schaffen, welche mit geringen Betätigungsmomenten angetrieben werden kann und über einen langen Zeitraum zuverlässig und störungsfrei betrieben werden kann.

Diese Aufgabe wird dadurch gelöst, dass der Rotationskörper im Gehäuse über eine Lagereinheit gelagert sowie axial und radial gegen Verschieben gesichert ist. Durch diese Festlegung des Rotationskörpers im Gehäuse und die gleichzeitig nur mit einer geringeren Reibung behaftete Lagerung des Rotationskörpers werden nur geringe Betätigungsmomente und somit kleine Antriebseinheiten benötigt. Ein Verschieben des Rotationskörpers wird zuverlässig vermieden, so dass ein störungsfreier Betrieb über einen langen Zeitraum sichergestellt werden kann.

Vorzugsweise weist der Rotationskörper eine im Wesentlichen hohlzylindrische Form auf, wobei das Gehäuse einen Abschnitt aufweist, der sich in den Rotationskörper erstreckt und als Lagerstelle für ein Lager dient, welches senkrecht zur Drehachse des Rotationskörpers angeordnet ist. Bei einer derartigen Vorrichtung sind die von der Antriebseinheit aufzubringenden Betätigungsmomente besonders niedrig, der Zusammenbau vereinfacht und die Anzahl der Bauteile gering.

Besonders vorteilhaft ist es, wenn das Lager oder die Lagereinheit durch zumindest ein Wälzlager gebildet ist, dessen Innenring und Außenring durch Sicherungsringe beziehungsweise Absätze am Gehäuse und am Rotationskörper in ihrer Lage fixiert sind. Ein solches Wälzlager weist eine hohe Verschleißfestigkeit auf und reduziert im Vergleich zu Gleitlagern noch einmal die vorhandenen Reibungskräfte.

Vorzugsweise weist der Rotationskörper eine Innenverzahnung auf, in die ein Zahnrad eines Untersetzungsgetriebes greift, welches die Rotation der Antriebseinheit auf den Rotationskörper überträgt. Durch diese innen liegende Verzahnung wird insbesondere der radial benötigte Bauraum zum Antrieb des Rotationskörpers minimiert.

In einer weiterführenden Ausführungsform ist das Untersetzungsgetriebe ein Planetenstandgetriebe, dessen Planetenrad oder Planetenräder in die Innenverzahnung des als Hohlrad dienenden Rotationskörpers greifen. Durch ein derartig ausgebildetes Getriebe werden Querkräfte am Rotationskörper vermieden, wobei der geringe Bauraumbedarf erhalten bleibt.

In einer weiteren vorteilhaften Ausführung ist das Kopplungselement durch einen Bolzen gebildet, der an beiden Seiten in einer Kurvenbahn des Rotationskörpers geführt ist und über eine Nut im Gehäuse gegen Verdrehen geschützt ist. Eine derartige Ausführung ist kostengünstig herstellbar und vermeidet insbesondere im Zusammenhang mit dem beschriebenen Getriebeantrieb auftretende Querkräfte und Querbewegungen.

Um zusätzliche Reibungskräfte zu verhindern, die vom Stellantrieb aufgebracht werden müssten, weist der Bolzen Lagerelemente im Bereich der Kurvenbahn auf, so dass eine kleine Antriebseinheit verwendet werden kann.

Um zuverlässig das Verstellelement in eine fail-safe Position bei Ausfall der Antriebseinheit zurückdrehen zu können, ist eine Rückstellfeder um den Rotationskörper angeordnet, deren erstes Ende am Gehäuse befestigt ist und deren zweites Ende am Rotationskörper befestigt ist. Durch diese Anordnung wird erneut der verwendete Bauraum minimiert.

Zur Lagerückmeldung ist im Gehäuse der Stellvorrichtung eine Platine mit einem berührungslosen Sensor angeordnet, der in Wirkverbindung mit einem Magneten steht, der mit dem Verstellelement derart gekoppelt ist, dass der Magnet der linearen Bewegung des Verstellelementes folgt. Somit ist über den gesamten Verstellbereich eine genaue Bestimmung der Lage des Verstellelementes möglich, ohne sich berührende Teile verwenden zu müssen. Des Weiteren handelt es sich um eine direkte Sensierung der Ventilstange, so dass eine sehr genaue Lagerückmeldung erfolgt.

In einer hierzu weiterführenden Ausführung weist der sich in den Rotationskörper erstreckende Abschnitt des Gehäuses eine Ausnehmung auf, in der die Platine angeordnet ist, wodurch erneut eine optimale Nutzung des vorhandenen Bauraums erreicht wird.

Ein besonders einfacher und Bauraum optimierter Aufbau ergibt sich, wenn der sich in den Rotationskörper erstreckende Abschnitt des Gehäuses eine zentrale Öffnung aufweist, in der eine Stange verschieblich angeordnet ist, deren erstes Ende auf dem Verstellelement aufliegt und deren entgegengesetztes Ende von einer Druckfeder umgeben ist, welche sich an ihrem ersten Ende gegen eine Erweiterung der Stange abstützt und an ihrem zweiten Ende gegen ein feststehendes Gehäuseteil abstützt, so dass die Stange in Richtung zum Verstellelement belastet ist, wobei an oder in der Stange der Magnet befestigt ist, der axial magnetisiert ist. So wird auf engstem Bauraum eine bestmögliche Lageerkennung hergestellt.

Vorzugsweise hat die Kurvenbahn einen nicht stetigen Verlauf, so dass der Kraft- und der Wegverlauf des Verstellelementes je nach Anwendung optimiert aufeinander eingestellt werden können. Hierdurch kann sowohl ein linearer oder aber ein nichtlinearer Momentenverlauf dargestellt werden. Zusätzlich können beliebige Ventilhubvariationen zur Verbesserung der Volumenstromregelung dargestellt werden. Des Weiteren ist es möglich, einen linearen Kraftverlauf für bestimmte Anwendungen zu verwirklichen.

Zusätzlich ist es möglich, im Gehäuse Kühlmittelkanäle auszubilden, so dass eine Überhitzung beispielsweise im Fall einer Verwendung als Abgasrückführventil ausgeschlossen werden kann.

Es wird somit eine Stellvorrichtung geschaffen, deren Mechanismus unempfindlich in Bezug auf Bauteiltoleranzen ist, wobei hohe Betätigungskräfte über eine lange Lebensdauer zuverlässig realisiert werden können. Insbesondere die Lagerung ist einfach und kostenoptimiert ausgeführt, wobei gleichzeitig aufgrund fehlender Querkräfte ebenfalls eine hohe Lebensdauer sichergestellt wird. Eine derartige Stellvorrichtung ist kostengünstig herzustellen und weist einen sehr geringen Bauraumbedarf auf.

Ein Ausführungsbeispiel einer erfindungsgemäßen Stellvorrichtung ist in den Figuren dargestellt und wird nachfolgend anhand der Verwendung für ein Abgasrückführventil beschrieben.

Figur 1 zeigt eine erste Seitenansicht einer erfindungsgemäßen Stellvorrichtung am Beispiel eines Abgasrückführventils in geschnittener Darstellung.

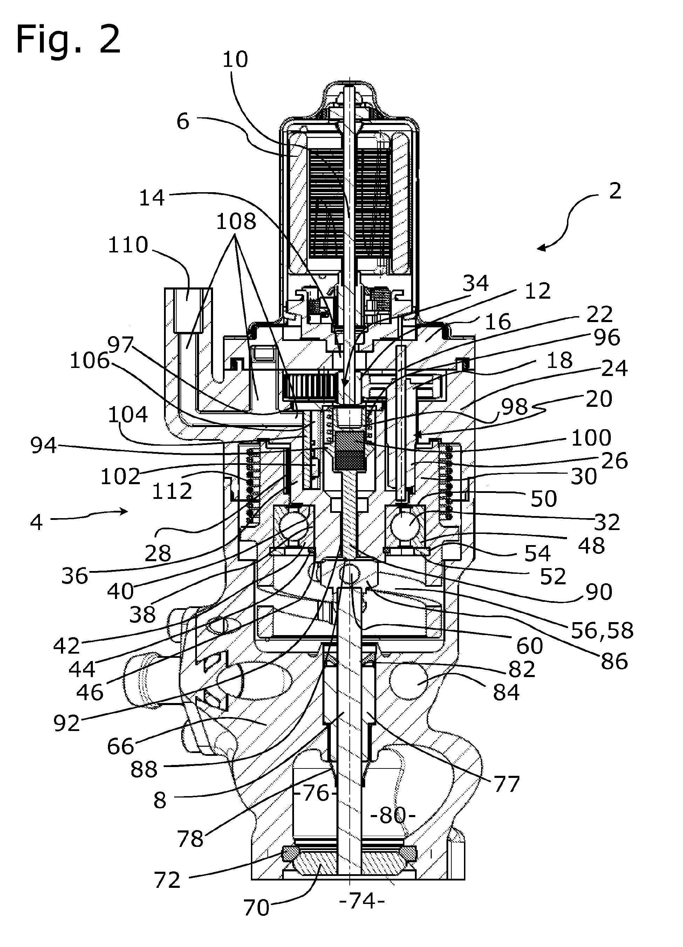

Figur 2 zeigt eine um 90° gedrehte Seitenansicht des in Figur 1 dargestellten Abgasrückführventils ebenfalls in geschnittener Darstellung.

Figur 3 zeigt eine perspektivische Ansicht eines Gehäuseteils der Stellvorrichtung aus den Figuren 1 und 2.

Figur 4 zeigt eine perspektivische Ansicht des Rotationskörpers der Stellvorrichtung aus den Figuren 1 und 2.

Die erfindungsgemäße Stellvorrichtung 2 besteht aus einem dreiteiligen Gehäuse 4, indem unterschiedliche Elemente zur Umwandlung einer rotatorischen Bewegung einer Antriebseinheit 6 in eine lineare Bewegung eines Verstellelementes 8 angeordnet sind.

Im vorliegenden Ausführungsbeispiel wird die Antriebseinheit 6 durch einen Elektromotor gebildet, auf dessen Antriebswelle 10 ein Antriebszahnrad 12 zumindest drehfest angeordnet ist. Die Antriebswelle 10 mit dem Antriebszahnrad 12 ragt durch eine Öffnung 14 in einem deckelförmigen ersten Gehäuseteil 16, auf dem der Elektromotor 6 befestigt ist.

Das Antriebszahnrad 12 kämmt jeweils mit dem größeren Zahnrad 18 dreier als Doppelzahnräder ausgeführter Planetenräder 20, die jeweils drehbar auf einer Achse 22 gelagert sind, die im ersten Gehäuseteil 16 sowie in einem zweiten Gehäuseteil 24 befestigt sind. Ein jeweils kleineres Zahnrad 26 der Planetenräder 20 kämmt mit einer Innenverzahnung 28 eines im Wesentlichen hohlzylindrisch ausgebildeten Rotationskörpers 30, der über eine Lagereinheit 32 im zweiten Gehäuseteil 24 gelagert und axial und radial gegen Verschieben gesichert ist. Das Antriebszahnrad 12 bildet mit dem Planetenrädern 20 sowie dem als Hohlrad dienenden Rotationskörper 30 ein Planetenstandgetriebe 34.

Die Lagerung des Rotationskörpers 30 erfolgt an einem sich in den Rotationskörper 30 erstreckenden Abschnitt 36 des zweiten Gehäuseteils 24, der als Lagerstelle 38 dient und einen Absatz 40 aufweist, gegen den ein Innenring 42 eines als Lagereinheit 32 dienenden Kugellagers anliegt, welches somit senkrecht zur Mittelachse des Rotationskörpers angeordnet ist. Das entgegengesetzte axiale Ende des Innenringes 42 des Kugellagers 32 wird über einen Sicherungsring 44, der in einer Außenumfangsnut 46 des Abschnittes 36 ausgebildet ist, gegen axiales Verschieben gesichert. Ein Außenring 48 des Kugellagers 32 liegt axial gegen einen Absatz 50 des Rotationskörpers 30 an und ist wiederum an seinem entgegengesetzten axialen Ende über einen Sicherungsring 52, der in einer Innenumfangsnut 54 des hohlzylindrischen Rotationskörpers 30 ausgebildet ist, gegen axiales Verschieben gesichert.

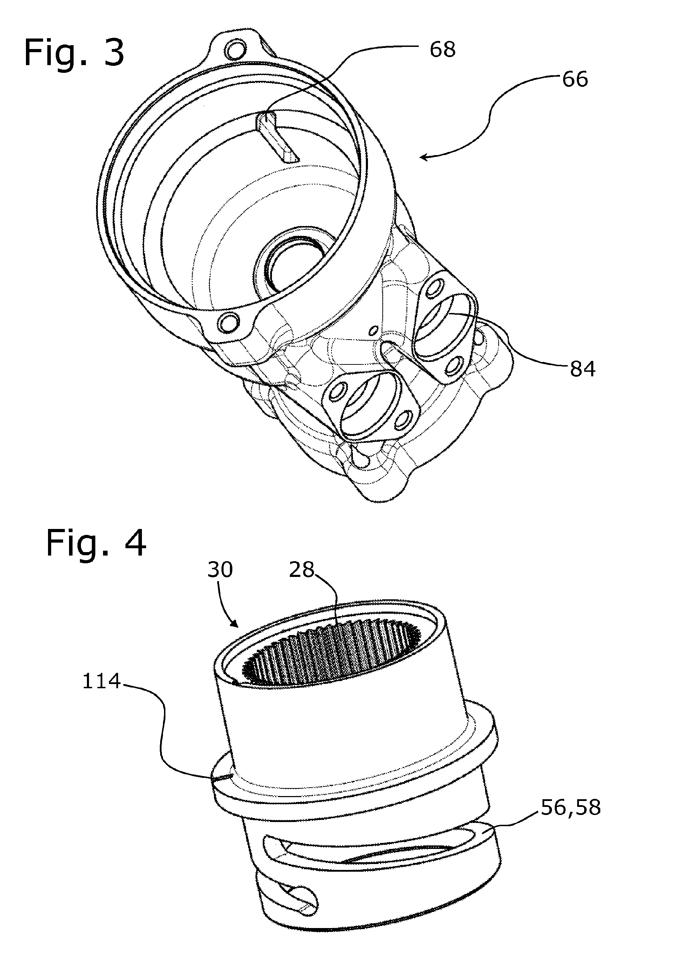

Der in Figur 4 separat dargestellte Rotationskörper 30 weist eine Wand mit zwei gegenüberliegenden, sich im Wesentlichen schraubenförmig erstreckenden Öffnungen 56 auf, die als Kurvenbahn 58 dienen. Die Steigungen dieser Kurvenbahnen sind gleich, können jedoch je nach Anwendung eine sich ändernde Steigung aufweisen, so dass ein bedarfsspezifischer Verlauf zwischen eingeleitetem Drehmoment und abgegebener Betätigungskraft einstellbar ist.

Durch die Öffnungen 56 erstreckt sich senkrecht zur Mittelachse des Rotationskörpers 30 zu beiden Seiten ein als Kopplungselementes dienender Bolzen 60, der über Lagerelemente 62 in den Öffnungen 56 beziehungsweise der Kurvenbahn 48 gelagert wird. Die Enden 64 des Bolzens 60 ragen jeweils über die Öffnungen 56 des Rotationskörpers 30 hinaus in je eine in einem dritten Gehäuseteil 66 ausgebildete Nut 68, wodurch eine Drehbewegung des Bolzens 60 zuverlässig vermieden wird. Die Anordnung zumindest einer dieser Nuten 68 ist insbesondere in Figur 3 ersichtlich.

Der Bolzen 60 ist im Bereich der Mittelachse des Rotationskörpers 30 mit einem sich in Richtung der Mittelachse erstreckenden Verstellelement 8 fest verbunden, welches im vorliegenden Ausführungsbeispiel durch eine Ventilstange gebildet wird, an dessen Ende ein Ventilteller 70 angeordnet ist. Der Ventilteller 70 wirkt in bekannter Weise mit einem Ventilsitz 72 zusammen, der im dritten Gehäuseteil 66 ausgebildet ist. Entsprechend ist im dritten Gehäuseteil 66 ein Gaseintritt 74 sowie ein Gasaustritt 76 ausgebildet, welche fluidisch durch den Ventilteller 70 voneinander trennbar sind.

Die Ventilstange 8 ist über ein weiteres Lager 77 im dritten Gehäuseteil 66 verschieblich gelagert, wobei eine Abdeckung 78, die die Ventilstange 8 im Gas durchströmten Kanal 80 zwischen Gaseintritt 74 und Gasaustritt 76 umschließt, ein Eindringen von Verschmutzungen in das Lager 77 verhindert. Ein zusätzlicher Dichtring 82 ist im dritten Gehäuseteil 66 am zur Stellvorrichtung 2 weisenden Ende der Ventilstange 8 angeordnet, um ein Eindringen von Verschmutzungen in die Stellvorrichtung 2 zu verhindern.

Um zusätzlich die Stellvorrichtung 2 vor Überhitzung zu schützen, ist im dritten Gehäuseteil 66 zwischen dem Kanal 80 und der Stellvorrichtung 2 ein Kühlmittelkanal 84 ausgebildet, der im Wesentlichen die Ventilstange 8 vollständig umgibt.

Am zum Ventilteller 70 entgegengesetzten Ende der Ventilstange 8 liegt auf der Ventilstange 8 oder einem Befestigungselement 86, an dem der Bolzen 60 und die Ventilstange 8 befestigt sind, mit ihrem ersten Ende 88 eine Stange 90 auf, die sich entlang der Mittelachse des Rotationskörpers 30 durch eine als Bohrung ausgebildete Öffnung 92 im Abschnitt 36 des zweiten Gehäuseteils 24 in Richtung zum Planetenstandgetriebe 34 erstreckt. Die Stange 90 weist an ihrem Außenumfang eine Erweiterung 94 auf, gegen die eine Druckfeder 96 anliegt, die das zum Elektromotor 6 weisende zweite Ende 98 der Stange 90 umgibt und deren entgegengesetztes Ende gegen eine am zweiten Gehäuseteil 24 befestigte Platte 97 anliegt. Durch diese Druckfeder 94 wird somit die Stange 88 ständig in Richtung des Verstellelementes 8 belastet und vollzieht somit die Hubbewegung des Verstellelementes 8 mit.

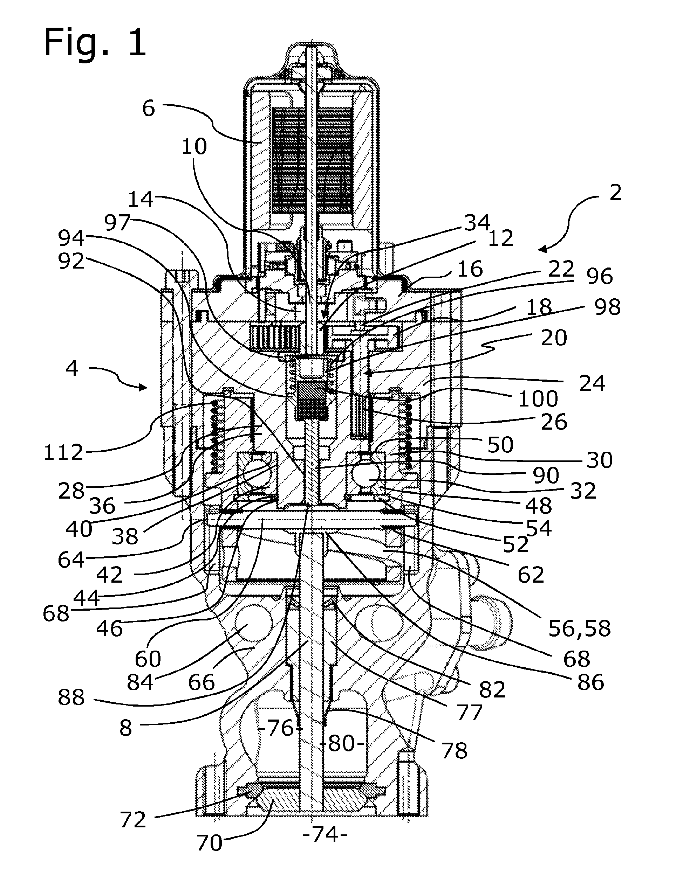

Am zweiten Ende 98 der Stange 90 ist ein Magnet 100 befestigt oder eingespritzt, der axial magnetisiert ist. Dieser wirkt in bekannter Weise mit einem berührungslosen Sensor 102 zusammen, der in vorliegendem Ausführungsbeispiel auf einer Platine 104 angeordnet ist, auf der auch die weitere Steuerelektronik der Stellvorrichtung 2 angeordnet sein kann. Die Platine 104 ist in einer Ausnehmungen 106 im zweiten Gehäuseteil 24 befestigt und ist über nicht dargestellte Leitungen, die in entsprechend ausgebildeten Kanälen 108 im zweiten Gehäuseteil 24 angeordnet sind, mit einem Stecker 110 verbunden, zu dem zusätzlich die Stromversorgungsleitungen des Elektromotors 6 über die Kanäle 108 führen, wie in Figur 1 zu erkennen ist.

Wird nun der Elektromotor 6 über den Stecker 110 bestromt, wird die entstehende Rotation der Antriebswelle 10 über das Planetenstandgetriebe 34 auf den Rotationskörper 30 übertragen. Durch die Drehbewegung des Rotationskörpers 30 folgt der Bolzen 60 und somit das mit ihm verbundene Verstellelement 8 der Steigung der Kurvenbahn 58, wobei dies eine rein axiale Bewegung zur Folge hat, da ein Verdrehen des Bolzens 60 durch die Führung in der Nut 68 verhindert wird. Somit entsteht bei Drehung des Rotationskörpers 30 eine zwangsgeführte lineare Bewegung des Verstellelementes 8.

Mit dem Heben und Senken des Verstellelementes wird auch der Magnet 100 in der Stange 90 linear mit bewegt, was über den berührungslosen Sensor 102 detektiert wird und über den Stecker 110 beispielsweise an eine Motorsteuereinheit zurückgemeldet werden kann. Entsprechend ist eine direkte Detektierung der Position des Verstellelementes 8 uneingeschränkt möglich, wodurch Fehler durch zwischenliegende Übersetzungen zuverlässig vermieden werden.

Sollte die Antriebseinheit 6 ausfallen, ist es häufig erforderlich, das Verstellelement 8 in eine Notlaufposition zurückzustellen. Hierzu ist eine Rückstellfeder 112 in Form einer schraubenförmigen Drehfeder um den Rotationskörper 30 herum angeordnet, deren erstes Ende am zweiten Gehäuseteil 24 befestigt ist und deren entgegengesetztes Ende am Rotationskörper 30 in einem Schlitz 114 befestigt ist. Werden der Rotationskörper 30 und somit das Verstellelement 8 aus ihrer Ruhestellung heraus gedreht, wird die Rückstellfeder 112 entsprechend durch Torsion gespannt. Bei Ausfall des Elektromotors 8 und somit wegfallender Haltekraft in einer beliebigen Position wirkt nun lediglich noch die Kraft der Feder, so dass deren Torsionsenergie freigesetzt wird und das Verstellelement automatisch in seine Ausgangsposition zurückgedreht wird.

Zur Erzeugung eines definierten vertikalen Hubs steht durch das dargestellte Ausführungsbeispiel ein größerer Eingangsdrehwinkel als beispielsweise bei ebenen Kurvenbahnen oder Excenterantrieben zur Verfügung, so dass kleinere und kostengünstigere Aktuatoren und Untersetzungsgetriebe verwendet werden können. Es wird verhindert, dass Querkräfte auf das Verstellelement 8 wirken, wodurch lediglich geringe Lagerbelastungen auftreten und der Verschleiß minimiert wird. So entsteht eine bezüglich des benötigten Bauraums optimierte Bauweise des gesamten Mechanismus, der auch in Bezug auf Bauteiltoleranzen unempfindlich ist.

Es sollte deutlich sein, dass der Schutzbereich der Ansprüche nicht auf das beschriebene Ausführungsbeispiel beschränkt ist. Modifikationen, insbesondere bezüglich der Gehäuseteile, des verwendeten Getriebes oder des zu verstellenden Bauteiles sind ebenso denkbar wie Anpassungen der Lagergeometrie innerhalb des Gehäuses oder der Ausführung der Kurvenbahnen.

## Patentansprüche

1. Stellvorrichtung zur Umwandlung einer rotatorischen Bewegung in eine lineare Bewegung mit
einem Gehäuse,
einer Antriebseinheit, die ein Drehmoment erzeugt,
einem Rotationskörper, der drehbar gelagert ist, zumindest eine Kurvenbahn aufweist und auf den das Drehmoment direkt oder indirekt
übertragbar ist,
einem Kopplungselement, welches in der Kurvenbahn geführt ist und
gegen ein Verdrehen um die Achse des Rotationskörpers direkt oder indirekt gesichert ist,
und einem Verstellelement, welches fest mit dem Kopplungselement verbunden ist,
**dadurch gekennzeichnet, dass**
der Rotationskörper (30) im Gehäuse (4) über eine Lagereinheit (32) gelagert sowie axial und radial gegen Verschieben gesichert ist.

2. Stellvorrichtung zur Umwandlung einer rotatorischen Bewegung in eine lineare Bewegung nach Anspruch 1,
**dadurch gekennzeichnet, dass**
der Rotationskörper (30) eine im Wesentlichen hohlzylindrische Form aufweist, wobei das Gehäuse (4) einen Abschnitt (36) aufweist, der sich in den Rotationskörper (30) erstreckt und als Lagerstelle (38) für ein Lager (32) dient, welches senkrecht zur Drehachse des Rotationskörpers (30) angeordnet ist.

3. Stellvorrichtung zur Umwandlung einer rotatorischen Bewegung in eine lineare Bewegung nach einem der Ansprüche 1 oder 2,
**dadurch gekennzeichnet, dass**
das Lager (32) oder die Lagereinheit durch zumindest ein Wälzlager gebildet ist, dessen Innenring (42) und Außenring (48) durch Sicherungsringe (44, 52) beziehungsweise Absätze (40, 50) am Gehäuse (4) und am Rotationskörper (30) in ihrer Lage fixiert sind.

4. Stellvorrichtung zur Umwandlung einer rotatorischen Bewegung in eine lineare Bewegung nach einem der vorhergehenden Ansprüche,
**dadurch gekennzeichnet, dass**
der Rotationskörper (30) eine Innenverzahnung (28) aufweist, in die ein Zahnrad (26) eines Untersetzungsgetriebes greift, welches die Rotation der Antriebseinheit (6) auf den Rotationskörper (30) überträgt.

5. Stellvorrichtung zur Umwandlung einer rotatorischen Bewegung in eine lineare Bewegung nach Anspruch 4,
**dadurch gekennzeichnet, dass**
das Untersetzungsgetriebe ein Planetenstandgetriebe (34) ist, dessen Planetenrad oder Planetenräder (20) in die Innenverzahnung (28) des als Hohlrad dienenden Rotationskörpers (30) greifen.

6. Stellvorrichtung zur Umwandlung einer rotatorischen Bewegung in eine lineare Bewegung nach einem der vorhergehenden Ansprüche,
**dadurch gekennzeichnet, dass**
das Kopplungselement (60) durch einen Bolzen gebildet ist, der an beiden Seiten in einer Kurvenbahn (58) des Rotationskörpers darauf (30) geführt ist und über zumindest eine Nut (68) im Gehäuse (4) gegen Verdrehen geschützt ist.

7. Stellvorrichtung zur Umwandlung einer rotatorischen Bewegung in eine lineare Bewegung nach einem der vorhergehenden Ansprüche,
**dadurch gekennzeichnet, dass**
der Bolzen (60) Lagerelemente (62) im Bereich der Kurvenbahn (58) aufweist.

8. Stellvorrichtung zur Umwandlung einer rotatorischen Bewegung in eine lineare Bewegung nach einem der vorhergehenden Ansprüche,
**dadurch gekennzeichnet, dass**
eine Rückstellfeder (112) um den Rotationskörper (30) angeordnet ist, deren erstes Ende am Gehäuse (4) befestigt ist und deren zweites Ende am Rotationskörper (30) befestigt ist.

9. Stellvorrichtung zur Umwandlung einer rotatorischen Bewegung in eine lineare Bewegung nach einem der vorhergehenden Ansprüche,
**dadurch gekennzeichnet, dass**
im Gehäuse (4) der Stellvorrichtung (2) eine Platine (104) mit einem berührungslosen Sensor (102) angeordnet ist, der in Wirkverbindung mit einem Magneten (100) steht, der mit dem Verstellelement (8) derart gekoppelt ist, dass der Magnet (100) der linearen Bewegung des Verstellelementes (8) folgt.

10. Stellvorrichtung zur Umwandlung einer rotatorischen Bewegung in eine lineare Bewegung nach Anspruch 9,
**dadurch gekennzeichnet, dass**
der sich in den Rotationskörper (30) erstreckende Abschnitt (36) des Gehäuses (4) eine Ausnehmung (106) aufweist, in der die Platine (104) angeordnet ist.

11. Stellvorrichtung zur Umwandlung einer rotatorischen Bewegung in eine lineare Bewegung nach einem der Ansprüche 9 oder 10,
**dadurch gekennzeichnet, dass**
der sich in den Rotationskörper (30) erstreckende Abschnitt (36) des Gehäuses (4) eine zentrale Öffnung (92) aufweist, in der eine Stange (90) verschieblich angeordnet ist, deren erstes Ende (88) auf dem Verstellelement (8) aufliegt und deren entgegengesetztes Ende (98) von einer Druckfeder (96) umgeben ist, welche sich an ihrem ersten Ende gegen eine Erweiterung (94) der Stange (90) abstützt und an ihrem zweiten Ende gegen ein feststehendes Gehäuseteil (97) abstützt, so dass die Stange (90) in Richtung zum Verstellelement (8) belastet ist, wobei an oder in der Stange (90) der Magnet (100) befestigt, der axial magnetisiert ist.

12. Stellvorrichtung zur Umwandlung einer rotatorischen Bewegung in eine lineare Bewegung nach einem der vorhergehenden Ansprüche,
**dadurch gekennzeichnet, dass**
die Kurvenbahn (58) einen nicht stetigen Verlauf hat.

13. Stellvorrichtung zur Umwandlung einer rotatorischen Bewegung in eine lineare Bewegung nach einem der vorhergehenden Ansprüche,
**dadurch gekennzeichnet, dass**
im Gehäuse zumindest ein Kühlmittelkanal (84) ausgebildet ist.
